# EUROPÄISCHE PATENTANMELDUNG

(11) **EP 2 072 913 A2**
(43) Veröffentlichungstag der Anmeldung: **24.06.2009**
(21) Anmeldenummer: 08021580.9
(22) Anmeldetag: 12.12.2008
(51) Int. Cl.: F24D 3/08

(54) **Speicher-Wassererwärmer**

(30) Priorität: 21.12.2007 DE 102007062294
(71) Anmelder: Robert Bosch GmbH, 70442 Stuttgart (DE)
(72) Erfinder: Kanis, Mark, 8181 TS Heerde (NL); Fokkink, Dennis, 7245 VE Laren (NL)

(57) **Zusammenfassung**

Die Erfindung betrifft einen Speicher-Wassererwärmer für die Erwärmung von Trinkwasser mit einem Speicherbehälter (1), Anschlussstücken (7, 10) zum hydraulischen Verbinden des Speicherbehälters (1) mit einer Kaltwassereintrittsleitung und einer Warmwasseraustrittsleitung (8), und mit einem innenliegenden, auf seiner Primärseite von Heizwasser durchströmbaren Wärmeübertrager mit Anschlussstücken (4, 6) zum hydraulischen Verbinden mit einer Vorlaufleitung und einer Rücklaufleitung eines Wärmeerzeugers.

Die Aufgabe der vorliegenden Erfindung ist es, einen Speicher-Wassererwärmer zu schaffen, der bei gleichem Trinkwarmwasserkomfort wie herkömmliche Speicher-Wassererwärmer mit deutlich geringerem Behältervolumen auskommt und somit kostengünstiger zu fertigen ist.

Der erfindungsgemäße Aufbau des Speicher-Wassererwärmers ist gekennzeichnet durch zwei in Reihe geschaltete, primärseitig von Heizwasser durchströmte Teilwärmeübertrager (2, 3). Nach dem Anschlussstück (4) zur Wärmeerzeuger-Vorlaufleitung ist ein erster Teilwärmeübertrager (2) angeordnet, der hinsichtlich der sekundärseitigen Wärmeübertragung auf das Trinkwasser nach dem Prinzip der erzwungenen Konvektion arbeitet. Ein nachfolgender zweiter Teilwärmeübertrager (3) funktioniert dagegen nach dem Prinzip der natürlichen Konvektion. Beispielsweise kann der erste Teilwärmeübertrager (2) von einem Plattenwärmeübertrager und der zweite Teilwärmeübertrager (3) von einer Rohrwendel gebildet werden.

## Beschreibung

Die Erfindung betrifft einen Speicher-Wassererwärmer nach dem Oberbegriff des Patentanspruches 1. Solche Speicher-Wassererwärmer sind hinlänglich bekannt und dienen der Erwärmung und Bevorratung von Trinkwarmwasser. Ihr konstruktiver Aufbau umfasst einen Speicherbehälter mit Anschlussstücken zum hydraulischen Verbinden des Speichervolumens mit einer Kaltwassereintrittsleitung und einer Warmwasseraustrittsleitung. Über die Kaltwassereintrittsleitung wird frisches kaltes Trinkwasser aus der öffentlichen Wasserversorgung in den Speicherbehälter geführt. Über die Warmwasseraustrittsleitung wird erwärmtes Trinkwasser aus dem Speicherbehälter abgezogen und den Verbrauchern zugeleitet. Ferner umfasst ihr Aufbau einen innenliegenden Wärmeübertrager, der auf seiner Primärseite von Heizwasser durchströmt wird. Zu diesem Zweck weist der Wärmeübertrager durch die Speicherbehälterwand nach außen geführte Anschlussstücke auf, die seiner hydraulischen Verbindung mit einer Vorlaufleitung und einer Rücklaufleitung eines Wärmeerzeugers dienen. Durch die Vorlaufleitung tritt vom Wärmeerzeuger erwärmtes Heizwasser in den Wärmeübertrager ein und gibt seine Wärme über die Wärmeübertragerwandung an das Trinkwasser ab. Über die Rücklaufleitung verlässt das abgekühlte Heizwasser den Wärmeübertrager und strömt zurück zum Wärmeerzeuger.

Die Güte eines Trinkwarmwassersystems ergibt sich aus einer bei verschiedenen Betriebsbedingungen gleichbleibend komfortablen Versorgung mit Trinkwarmwasser. Die Betriebsbedingungen umfassen Zapfungen kleiner, mittlerer und großer Warmwassermengen beispielsweise für Händewaschen, Duschen oder Vollbad. Diese Zapfungen können bei kleineren oder größeren Volumenströmen (Zapfleistungen) stattfinden und von kürzeren oder längeren Zapfpausen unterbrochen sein. Warmwasserkomfort bedeutet, dass die Warmwassertemperatur bei allen Volumina, Volumenströmen und Pausen möglichst konstant ohne Über- oder Unterschwinger verläuft. Gegenüber dem Prinzip der Durchlauferhitzung bietet das Speicherprinzip den Vorteil, dass der Wärmeerzeuger (z.B. Heizkessel mit Gas- oder Ölbrenner) gegenüber der Zapfleistung mit relativ geringer Wärmeleistung (z.B. Brennerleistung) auskommt. Um auch große Zapfvolumina komfortabel bedienen zu können wird das Behältervolumen entsprechend vergrößert. Dem werden Grenzen durch den zur Verfügung stehenden Bauraum und natürlich die Herstellkosten gesetzt.

Die Aufgabe der vorliegenden Erfindung ist es, einen Speicher-Wassererwärmer zu schaffen, der bei gleichem Trinkwarmwasserkomfort wie herkömmliche Speicher-Wassererwärmer mit deutlich geringerem Behältervolumen auskommt und somit kostengünstiger zu fertigen ist.

Erfindungsgemäß wird dies mit den Merkmalen des Patentanspruchs 1 gelöst. Vorteilhafte Weiterbildungen sind den Unteransprüchen zu entnehmen.

Der erfindungsgemäße Aufbau des Speicher-Wassererwärmers ist gekennzeichnet durch zwei in Reihe geschaltete, primärseitig von Heizwasser durchströmte Teilwärmeübertrager. Nach dem Anschlussstück zur Wärmeerzeuger-Vorlaufleitung ist ein erster Teilwärmeübertrager angeordnet, der hinsichtlich der sekundärseitigen Wärmeübertragung auf das Trinkwasser nach dem Prinzip der erzwungenen Konvektion arbeitet. Ein nachfolgender zweiter Teilwärmeübertrager funktioniert dagegen nach dem Prinzip der natürlichen Konvektion. Beispielsweise kann der erste Teilwärmeübertrager von einem Plattenwärmeübertrager und der zweite Teilwärmeübertrager von einer Rohrwendel gebildet werden.

Um eine natürliche Schichtung des Trinkwassers im Speicherbehälter nach seiner jeweiligen Temperatur bzw. Dichte zu unterstützen, mündet die Kaltwassereintrittsleitung im unteren Bereich des Speicherbehälters ein und die Warmwasseraustrittsleitung mündet im oberen Bereich des Speicherbehälters aus. Der erste Teilwärmeübertrager ist mit seiner Sekundärseite hydraulisch in die Warmwasseraustrittsleitung integriert, er erwärmt das Trinkwasser auf seiner Sekundärseite nach dem Durchflussprinzip. Der zweite Teilwärmeübertrager erwärmt das Trinkwasser im Speicherbehälter nach dem Speicherprinzip.

Bei Warmwasserzapfung wird das austretende Trinkwarmwasser aus dem vom zweiten Teilwärmeübertrager erwärmten oberen Bereich des Speicherbehälters abgesaugt, durch den ersten Teilwärmeübertrager geführt und tritt über die Warmwasseraustrittsleitung aus dem Speicherbehälter aus. Zumindest bei größeren Trinkwarmwasser-Zapfvolumina, aber auch zum Erwärmen des bevorrateten Speichervolumens werden die Teilwärmeübertrager primärseitig von zirkulierendem Heizwasser beheizt.

Der erste Teilwärmeübertrager kann ohne Wärmedämmung in direktem Kontakt zum Trinkwarmwasser im Speicherbehälter untergebracht sein. In einer anderen Ausführungsform ist er gegenüber seiner Umgebung wärmegedämmt.

Beide Teilwärmeübertrager können im oberen Bereich oder auch im unteren Bereich des Speicherbehälters angeordnet sein. Zur Verkleinerung des Bauvolumens kann der erste Teilwärmeübertrager im unteren Bereich des Speicherbehälters und der zweite Teilwärmeübertrager im oberen Bereich angeordnet sein, oder umgekehrt. Bei Anordnung im oberen warmen Behälterbereich wird verhindert, dass der Teilwärmeübertrager auskühlt. Bei Anordnung im unteren Bereich wird die Auskühlung begünstigt.

Mit dieser Erfindung wird ein Speicher-Wassererwärmer geschaffen, der bei vergleichsweise kleinem Behältervolumen einen hohen Trinkwarmwasserkomfort bietet. Kleinere Zapfleistungen werden aus dem Trinkwarmwasservolumen im Speicherbehälter bedient, das von der Rohrwendel, also dem zweiten Teilwärmeübertrager nach dem Speicherprinzip erwärmt wird. Dafür ist ein Nachheizen des Speichervolumens nicht erforderlich. Bei größeren Zapfleistungen, wenn die Temperatur des im Speicher bevorrateten Trinkwarmwassers abzufallen beginnt, kann das vorerwärmte Trinkwasser beim Durchfließen des Plattenwärmeübertragers, also des ersten Teilwärmeübertragers, nach dem Durchflussprinzip bis zur Soll-Temperatur erwärmt werden. Das Volumen des Speicherbehälters wird also nicht auf die zu erwartende maximale Zapfleistung ausgelegt, sondern kann bei hohem Warmwasserkomfort deutlich kleiner und damit kostengünstiger gewählt werden. Wegen der im Speichervolumen integrierten Anordnung des ersten Teilwärmeübertragers sind dessen evtl. Wärmeverluste keine Wärmeverluste für das System, sondern sie gehen in die allgemeine Erwärmung des Trinkwassers im Speicherbehälter ein.

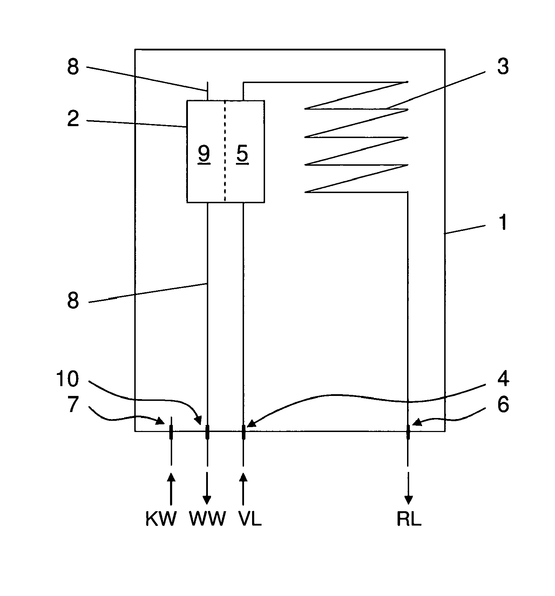

Die Zeichnung stellt schematisch in einer Figur eine geeignete Ausführung des erfindungsgemäßen Speicher-Wassererwärmers dar.

Der Speicher-Wassererwärmer umfasst einen Speicherbehälter 1 mit zwei in Reihe geschalteten Teilwärmeübertragern 2, 3. Ein Heizwasserstrom VL fließt vom Wärmeerzeuger (nicht dargestellt) kommend über das Vorlaufleitungsanschlussstück 4 durch die Primärseite 5 des ersten Teilwärmeübertragers 2. Von dort fließt er weiter durch die Primärseite des zweiten Teilwärmeübertragers 3 (hier eine Rohrwendel) zum Rücklaufleitungsanschlussstück 6, wo er als abgekühlter Rücklauf RL den Speicher-Wassererwärmer verlässt und zurück zum Wärmeerzeuger strömt. Bei Trinkwarmwasserzapfung strömt frisches kaltes Trinkwasser KW von der Kaltwassereintrittsleitung kommend über das Anschlussstück 7 in den unteren Bereich des Speicherbehälters 1, während warmes Trinkwasser WW aus dem oberen Behälterbereich über die Warmwasseraustrittsleitung 8, die Sekundärseite 9 des ersten Teilwärmeübertragers 2 und das Anschlussstück 10 aus dem Behälter 1 ausströmt und zu den Verbrauchern geleitet wird.

## Patentansprüche

1. Speicher-Wassererwärmer für die Erwärmung von Trinkwasser mit einem Speicherbehälter (1), Anschlussstücken (7, 10) zum hydraulischen Verbinden des Speicherbehälters (1) mit einer Kaltwassereintrittsleitung und einer Warmwasseraustrittsleitung (8), und mit einem innenliegenden, auf seiner Primärseite von Heizwasser durchströmbaren Wärmeübertrager mit Anschlussstücken (4, 6) zum hydraulischen Verbinden mit einer Vorlaufleitung und einer Rücklaufleitung eines Wärmeerzeugers,
**dadurch gekennzeichnet, dass** der Wärmeübertrager zwei in Reihe geschaltete Teilwärmeübertrager (2, 3) umfasst, wobei der nach dem Anschlussstück (4) zur Vorlaufleitung erste Teilwärmeübertrager (2) hinsichtlich der sekundärseitigen Wärmeübertragung auf das Trinkwasser nach dem Prinzip der erzwungenen Konvektion und der nachfolgende zweite Teilwärmeübertrager (3) nach dem Prinzip der natürlichen Konvektion arbeitet.

2. Speicher-Wassererwärmer nach Anspruch 1,
**dadurch gekennzeichnet, dass** der erste Teilwärmeübertrager (2) von einem Plattenwärmeübertrager und der zweite Teilwärmeübertrager (3) von einer Rohrwendel gebildet werden.

3. Speicher-Wassererwärmer nach einem der Ansprüche 1 oder 2,
**dadurch gekennzeichnet, dass** die Kaltwassereintrittsleitung im unteren Bereich des Speicherbehälters (1) einmündet und dass die Warmwasseraustrittsleitung (8) im oberen Bereich des Speicherbehälters (1) ausmündet.

4. Speicher-Wassererwärmer nach einem der Ansprüche 1 bis 3,
**dadurch gekennzeichnet, dass** der erste Teilwärmeübertrager (2) mit seiner Sekundärseite (9) hydraulisch in die Warmwasseraustrittsleitung (8) integriert ist und das Trinkwasser auf seiner Sekundärseite (9) nach dem Durchflussprinzip erwärmt.

5. Speicher-Wassererwärmer nach einem der Ansprüche 1 bis 4,
**dadurch gekennzeichnet, dass** der zweite Teilwärmeübertrager (3) das Trinkwasser im Speicherbehälter (1) erwärmt.

6. Speicher-Wassererwärmer nach einem der Ansprüche 1 bis 5,
**dadurch gekennzeichnet, dass** bei Warmwasserzapfung das austretende Trinkwarmwasser aus dem vom zweiten Teilwärmeübertrager (3) erwärmten oberen Bereich des Speicherbehälters (1) abgesaugt, durch den ersten Teilwärmeübertrager (2) geführt wird und über die Warmwasseraustrittsleitung (8) aus dem Speicherbehälter (1) austritt.

7. Speicher-Wassererwärmer nach einem der Ansprüche 1 bis 6,
**dadurch gekennzeichnet, dass** mindestens bei größeren Trinkwarmwasser-Zapfvolumina die Teilwärmeübertrager (2, 3) primärseitig von zirkulierendem Heizwasser beheizt werden.

8. Speicher-Wassererwärmer nach einem der Ansprüche 1 bis 7,
**dadurch gekennzeichnet, dass** der erste Teilwärmeübertrager (2) gegenüber seiner Umgebung wärmegedämmt ausgeführt ist.

9. Speicher-Wassererwärmer nach einem der Ansprüche 1 bis 8,
**dadurch gekennzeichnet, dass** beide Teilwärmeübertrager (2, 3) im oberen Bereich des Speicherbehälters (1) angeordnet sind.

10. Speicher-Wassererwärmer nach einem der Ansprüche 1 bis 8,
**dadurch gekennzeichnet, dass** beide Teilwärmeübertrager (2, 3) im unteren Bereich des Speicherbehälters (1) angeordnet sind.

11. Speicher-Wassererwärmer nach einem der Ansprüche 1 bis 8,
**dadurch gekennzeichnet, dass** der erste Teilwärmeübertrager (2) im unteren Bereich des Speicherbehälters (1) und der zweite Teilwärmeübertrager (3) im oberen Bereich angeordnet sind.

12. Speicher-Wassererwärmer nach einem der Ansprüche 1 bis 8,
**dadurch gekennzeichnet, dass** der erste Teilwärmeübertrager (2) im oberen Bereich des Speicherbehälters (1) und der zweite Teilwärmeübertrager (3) im unteren Bereich angeordnet sind.
